# EUROPEAN PATENT APPLICATION

(11) **EP 3 413 111 A1**
(43) Date of publication of application: **12.12.2018**
(21) Application number: 16889421.0
(22) Date of filing: 14.12.2016
(51) Int. Cl.: G02B 7/04, H02N 2/16

(54) **OPTICAL ELEMENT DRIVE DEVICE, INTERCHANGEABLE LENS, AND IMAGE PICKUP DEVICE**

(30) Priority: 02.02.2016 JP 2016017705
(71) Applicant: Sony Corporation, Tokyo 108-0075 (JP)
(72) Inventor: KATSUMATA, Soichiro, Tokyo 108-0075 (JP)
(74) Representative: D Young & Co LLP
(86) International application number: PCT/JP2016/087290
(87) International publication number: WO 2017/134938

(57) **Abstract**

To secure a smooth rotating state of a rotary drive body with a simple structure without deteriorating the characteristics of an ultrasonic motor. Provided are an ultrasonic motor including a rotor and a stator, a rotary drive body that moves an optical device in an axial direction by being rotated around an axis by driving force of the ultrasonic motor, a bearing rotatable around the axis, and a compression spring that applies axial bias force to the ultrasonic motor, the rotary drive body, and the bearing. The rotor and the stator are biased in a contact direction and the rotary drive body and the bearing are biased in a contact direction by the compression spring.

## Description

### Technical Field

The present technology relates to a technical field regarding an optical-device drive apparatus that moves an optical device by driving force of an ultrasonic motor, and an interchangeable lens and an image pickup apparatus including the same.

### Citation List

### Patent Literature

Patent Literature 1: Japanese examined utility model application publication No. HEI 3-31929
Patent Literature 2: Japanese Patent Application Laid-open No. HEI 2-137811

### Background Art

Inside a structure used for photographing, which includes various image pickup apparatuses such as a video camera and a still camera, an interchangeable lens, and the like, a photographing optical system including various optical devices such as a lens group and the like is disposed.

In such a structure, the optical devices are moved by an optical-device drive apparatus in an optical axial direction (axial direction) and zooming, focusing, and the like are performed, for example.

Some of the optical-device drive apparatuses use ultrasonic motors as driving sources (e.g., see Patent Literatures 1 and 2). By the use of the ultrasonic motor, a driven body (optical device) can be positioned with high precision. Further, there is also an advantage that optical devices can be retained in a de-energized state by using the ultrasonic motor as the driving source.

In such an ultrasonic motor, a rotor and a stator are provided. Flexural waves are generated in the stator by ultrasonic vibration. Then, the rotor is rotationally driven by a travelling wave thereof and driving force is transmitted to a driven body. Thus, in order to efficiently transmit the travelling wave generated in the stator to the rotor, it is necessary to hold the rotor and the stator in contact with each other at a constant pressure.

In an image pickup apparatus including the optical-device drive apparatus described in Patent Literature 1, a bearing portion is configured in such a manner that an ultrasonic motor is coupled to a rotating ring and balls are disposed between two retaining rings fixed to a fixing cylinder and part of the rotating ring. Driving force of the ultrasonic motor is transmitted from the rotating ring to a cylinder (moving frame) retaining a lens. The cylinder and the lens are moved in the optical axial direction by rotation of the rotating ring.

Further, an image pickup apparatus including the optical-device drive apparatus described in Patent Literature 2 is configured such that force in an axial direction (thrust direction) which is generated in a cam ring that is a rotary drive body is received by a radial bearing structure.

### Disclosure of Invention

### Technical Problem

By the way, in the image pickup apparatus using the ultrasonic motor as the driving source, it is desirable to ensure a smooth rotating state of a rotary drive body such as a cam ring with a simple structure without deteriorating the characteristics of the ultrasonic motor.

Regarding this point, in the optical-device drive apparatus described in Patent Literature 1, the balls of the bearing are restricted by the two retaining rings both in a thrust direction and a radial direction, which provides a structure in which vibration and the like are easily transmitted from the bearing to the rotating ring and the ultrasonic motor. Thus, there is a fear that favorable characteristics of the ultrasonic motor and the smooth rotating state of the rotary drive body are not ensured.

Further, in a case of the configuration in which the axial force generated in the cam ring is received by the radial bearing structure as in the optical-device drive apparatus described in Patent Literature 2, force in a direction orthogonal to an axial direction of a supporting point axis that is a rotation center of the radial bearing is applied from the cam ring. Thus, a large load is generated particularly in a direction in which the supporting point axis falls if a large impact occurs, and there is still a possibility that the favorable characteristics of the ultrasonic motor and the smooth rotating state of the rotary drive body are not ensured.

In this regard, an optical-device drive apparatus, an interchangeable lens, and an image pickup apparatus according to the present technology aim at overcoming the problems described above and ensuring a smooth rotating state of a rotary drive body with a simple structure without deteriorating the characteristics of an ultrasonic motor.

### Solution to Problem

Firstly, an optical-device drive apparatus according to the present technology includes: an ultrasonic motor including a rotor and a stator; a rotary drive body that moves an optical device in an axial direction by being rotated around an axis by driving force of the ultrasonic motor; a bearing rotatable around the axis; and a compression spring that applies axial bias force to the ultrasonic motor, the rotary drive body, and the bearing, in which the rotor and the stator are biased in a contact direction and the rotary drive body and the bearing are biased in a contact direction by the compression spring.

With this configuration, bias force is applied from the compression spring to the ultrasonic motor in such a direction that the rotor and the stator come into contact with each other and bias force is applied from the compression spring to the rotary drive body or the bearing in such a direction that both come into contact with each other.

Secondly, it is desirable that the above-mentioned optical-device drive apparatus further include a securing ring for linear movement that guides the optical device in the axial direction, in which the securing ring for linear movement include a receiver that receives the bearing or the rotary drive body biased by the compression spring in the axial direction.

With this configuration, the securing ring for linear movement functions as a guide member that guides the optical device and functions as a receiver member that receives the bearing or the rotary drive body.

Thirdly, in the above-mentioned optical-device drive apparatus, it is desirable that the compression spring be formed in an annular shape.

With this configuration, bias force is applied over the whole circumference of the bearing, the rotary drive body, and the ultrasonic motor by the compression spring.

Fourthly, in the above-mentioned optical-device drive apparatus, it is desirable that the rotary drive body include a cam ring having a cam groove, the optical-device drive apparatus further include a moving frame that retains the optical device, the moving frame including a cam pin that is slidably engaged with the cam groove, in which the cam groove be formed in a recess shape by a wall surface including a bottom surface.

With this configuration, no through-holes are formed in the rotary drive body. Thus, the rigidity of the rotary drive body increases, and the driving force transmitted from the ultrasonic motor to the rotary drive body is hardly attenuated.

Fifthly, in the above-mentioned optical-device drive apparatus, it is desirable that the cam pin include a bearing portion rotatable with respect to the cam groove.

With this configuration, during axial movement of the optical device, the bearing portion is rotated with respect to the rotary drive body.

Sixthly, it is desirable that the above-mentioned optical-device drive apparatus further include: a bias frame that is positioned apart from the moving frame in the axial direction and supported by the cam ring; and a bias spring that biases the moving frame and the bias frame in a direction to be spaced away from each other or a direction to approach each other in the axial direction.

With this configuration, the cam pin of the moving frame is pressed against the wall surface forming the cam groove.

Seventhly, in the above-mentioned optical-device drive apparatus, it is desirable that the bias frame include an engagement pin that is slidably engaged with the cam groove.

With this configuration, the cam pin and the engagement pin are slidably engaged with the cam groove together.

Eighthly, in the above-mentioned optical-device drive apparatus, it is desirable that the cam groove include a retracting portion at at least one end portion, the retracting portion having a larger groove width than a groove width of other part, and the cam pin be positioned at the retracting portion when the optical device is in a non-use state.

With this configuration, when impact or the like occurs under the non-use state, the cam pin is displaced at the retracting portion.

Ninthly, it is desirable that the above-mentioned optical-device drive apparatus further include: a rotation position-detecting sensor that detects a rotation position of the cam ring; and a movement position-detecting sensor that detects a movement position of the moving frame, in which the rotation position-detecting sensor and the movement position-detecting sensor provide detection results based on which positional information of the optical device is calculated.

With this configuration, the positional information of the optical device is calculated on the basis of the rotation position of the rotary drive body and the movement position of the moving frame.

Tenthly, an interchangeable lens according to the present technology includes: an outer casing having a cylindrical shape; and an optical-device drive apparatus that performs driving of an optical device, the optical-device drive apparatus being disposed inside the outer casing and including an ultrasonic motor including a rotor and a stator, a rotary drive body that moves the optical device in an axial direction by being rotated around an axis by driving force of the ultrasonic motor, a bearing rotatable around the axis, and a compression spring that applies axial bias force to the ultrasonic motor, the rotary drive body, and the bearing, in which the rotor and the stator are biased in a contact direction and the rotary drive body and the bearing are biased in a contact direction by the compression spring.

With this configuration, in the optical-device drive apparatus, bias force is applied from the compression spring to the ultrasonic motor in such a direction that the rotor and the stator come into contact with each other and bias force is applied from the compression spring to the rotary drive body or the bearing in such a direction that both come into contact with each other.

Eleventhly, in the above-mentioned interchangeable lens, it is desirable that the optical-device drive apparatus further include a securing ring for linear movement that guides the optical device in the axial direction, in which the securing ring for linear movement include a receiver that receives the bearing or the rotary drive body biased by the compression spring in the axial direction.

With this configuration, the securing ring for linear movement functions as a guide member that guides the optical device and functions as a receiver member that receives the bearing or the rotary drive body.

Twelfthly, in the above-mentioned interchangeable lens, it is desirable that the compression spring be formed in an annular shape.

With this configuration, bias force is applied over the whole circumference of the bearing, the rotary drive body, and the ultrasonic motor by the compression spring.

Thirteenthly, in the above-mentioned interchangeable lens, it is desirable that the rotary drive body include a cam ring having a cam groove, the optical-device drive apparatus further include a moving frame that retains the optical device, the moving frame including a cam pin that is slidably engaged with the cam groove, and the cam groove be formed in a recess shape by a wall surface including a bottom surface.

With this configuration, no through-holes are formed in the rotary drive body. Thus, the rigidity of the rotary drive body increases, and the driving force transmitted from the ultrasonic motor to the rotary drive body is hardly attenuated.

Fourteenthly, in the above-mentioned interchangeable lens, it is desirable that the cam pin include a bearing portion rotatable with respect to the cam groove.

With this configuration, during axial movement of the optical device, the bearing portion is rotated with respect to the rotary drive body.

Fifteenthly, in the above-mentioned interchangeable lens, it is desirable that the optical-device drive apparatus further include a bias frame that is positioned apart from the moving frame in the axial direction and supported by the cam ring, and a bias spring that biases the moving frame and the bias frame in a direction to be spaced away from each other or a direction to approach each other in the axial direction.

With this configuration, the cam pin of the moving frame is pressed against the wall surface forming the cam groove.

Sixteenthly, in the above-mentioned interchangeable lens, it is desirable that the bias frame include an engagement pin that is slidably engaged with the cam groove.

With this configuration, the cam pin and the engagement pin are slidably engaged with the cam groove together.

Seventeenthly, in the above-mentioned interchangeable lens, it is desirable that the cam groove include a retracting portion at at least one end portion, the retracting portion having a larger groove width than a groove width of other part, and the cam pin be positioned at the retracting portion when the optical device is in a non-use state.

With this configuration, when impact or the like occurs under the non-use state, the cam pin is displaced at the retracting portion.

Eighteenthly, in the above-mentioned interchangeable lens, it is desirable that the optical-device drive apparatus further include a rotation position-detecting sensor that detects a rotation position of the cam ring, and a movement position-detecting sensor that detects a movement position of the moving frame, and the rotation position-detecting sensor and the movement position-detecting sensor provide detection results based on which positional information of the optical device is calculated.

With this configuration, the positional information of the optical device is calculated on the basis of the rotation position of the rotary drive body and the movement position of the moving frame.

Nineteenthly, in the above-mentioned interchangeable lens, it is desirable that the optical-device drive apparatus further include a movement position-detecting sensor and a detection sheet that detect a movement position of the moving frame, and the movement position-detecting sensor and the detection sheet be disposed in such a positional relationship that the movement position-detecting sensor and the detection sheet overlap each other in a direction perpendicular to an optical axis in an entire movement region in which the moving frame moves in an optical axial direction.

With this configuration, information written on the detection sheet is read by the movement position-detecting sensor irrespective of the movement position of the moving frame in the optical axial direction.

Twentiethly, an image pickup apparatus according to the present technology includes: an optical-device drive apparatus that drives an optical device; and an image pickup device that converts an optical image captured via a photographing optical system into an electrical signal, the optical-device drive apparatus including an ultrasonic motor including a rotor and a stator, a rotary drive body that moves the optical device in an axial direction by being rotated around an axis by driving force of the ultrasonic motor, a bearing rotatable around the axis, and a compression spring that applies axial bias force to the ultrasonic motor, the rotary drive body, and the bearing, in which the rotor and the stator are biased in a contact direction and the rotary drive body and the bearing are biased in a contact direction by the compression spring.

With this configuration, in the optical-device drive apparatus, bias force is applied from the compression spring to the ultrasonic motor in such a direction that the rotor and the stator come into contact with each other and bias force is applied from the compression spring to the rotary drive body or the bearing in such a direction that both come into contact with each other.

### Advantageous Effects of Invention

In accordance with the present technology, bias force is applied from the compression spring to the ultrasonic motor in such a direction that the rotor and the stator come into contact with each other and bias force is applied from the compression spring to the rotary drive body or the bearing in such a direction that both come into contact with each other. Thus, it is possible to ensure a smooth rotating state of a rotary drive body with a simple structure without deteriorating the characteristics of an ultrasonic motor.

It should be noted that the effects described in the specification are mere examples and should not be limited, and other effects may also be obtained.

### Brief Description of Drawings

[Fig. 1] A perspective view showing an embodiment of an optical-device drive apparatus, an interchangeable lens, and an image pickup apparatus according to the present technology together with Figs. 2 to 12, and this view shows the image pickup apparatus with the interchangeable lens and an apparatus main body being separated.
[Fig. 2] An enlarged cross-sectional view showing the optical-device drive apparatus and the like.
[Fig. 3] A conceptual diagram showing a securing ring for linear movement, a rotary drive body, a moving frame, and a bias frame.
[Fig. 4] An enlarged perspective view showing the securing ring for linear movement and the like in cross-section.
[Fig. 5] An enlarged perspective view of the rotary drive body.
[Fig. 6] An enlarged perspective view showing half of the rotary drive body.
[Fig. 7] An exploded perspective view of a bearing.
[Fig. 8] An exploded perspective view showing an ultrasonic motor and a compression spring.
[Fig. 9] An exploded perspective view showing the moving frame, a bias spring, and the bias frame.
[Fig. 10] An enlarged perspective view of a cam pin.
[Fig. 11] A block diagram of an image pickup apparatus.
[Fig. 12] A conceptual diagram showing examples of an arrangement order of the bearing, the rotary drive body, the ultrasonic motor, and the compression spring.

### Mode(s) for Carrying Out the Invention

Hereinafter, modes for carrying out the present technology will be described with reference to the accompanying drawings.

In embodiments to be shown below, an image pickup apparatus according to the present technology is applied to a still camera, an interchangeable lens according to the present technology is applied to an interchangeable lens detachable from an apparatus main body of this still camera, and an optical-device drive apparatus according to the present technology is applied to an optical-device drive apparatus provided in this interchangeable lens.

It should be noted that an application range of the present technology is not limited to the still camera, the interchangeable lens detachable from the apparatus main body of the still camera, and the optical-device drive apparatus provided in the interchangeable lens detachable from the apparatus main body of the still camera. For example, the present technology is widely applicable to various image pickup apparatuses incorporated in video cameras and other apparatuses as image pickup apparatuses, interchangeable lenses detachable from the apparatus main bodies of these image pickup apparatuses, and optical-device drive apparatuses provided in the interchangeable lenses detachable from the apparatus main bodies of these image pickup apparatuses.

In descriptions below, front and back, upper and lower, and right- and left-hand directions will be indicated by directions viewed from a photographer during photographing using a still camera. Therefore, a subject side becomes the front side, and a photographer side becomes the rear side.

It should be noted that the front and back, upper and lower, and right- and left-hand directions to be shown below are used for convenience of explanation, and the directions are not limited to these directions regarding implementation of the present technology.

Further, a lens group to be shown below may include, in addition to a lens group including one or more lenses, a lens group including these one or more lenses and other optical devices such as a diaphragm and an iris.

### <Configuration of Image Pickup Apparatus>

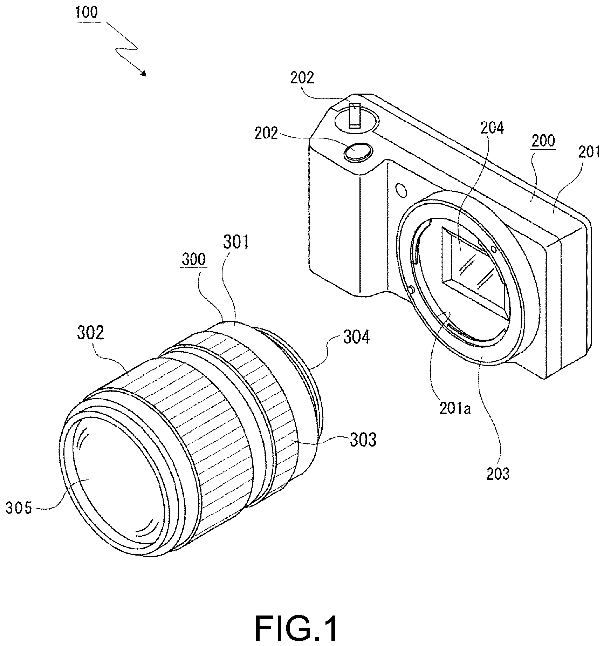

An image pickup apparatus 100 includes an apparatus main body 200 and an interchangeable lens 300 (see Fig. 1). Note that the present technology can also be applied to a type in which a lens barrel having a structure similar to an internal structure of the interchangeable lens 300 is incorporated inside the apparatus main body and to a retractable type in which such a lens barrel is extended or housed from/in the apparatus main body.

The apparatus main body 200 includes respective main parts disposed inside or outside a casing 201.

The casing 201 has an upper surface and a rear surface on which various operation units 202, 202, ... are disposed, for example. As the operation units 202, 202, ..., for example, a power supply button, a shutter button, a zoom knob, a mode-switching knob, and the like are provided.

A display (display unit) not shown in the figures is disposed on the rear surface of the casing 201.

An opening 201a having a circular shape is formed in a front surface of the casing 201. A peripheral portion of the opening 201a is provided as a mounting portion 203 for mounting the interchangeable lens 300.

An image pickup device 204 such as a charge coupled device (CCD) and a complementary metal-oxide semiconductor (CMOS) is disposed inside the casing 201. The image pickup device 204 is positioned on the rear side of the opening 201a.

### <Configuration of Interchangeable Lens>

The interchangeable lens 300 is, for example, an interchangeable lens for digital single-lens reflex camera.

A lens mount 301 is provided at a rear end portion of the interchangeable lens 300. The lens mount 301 is bayonet-coupled, for example, to the mounting portion 203 of the apparatus main body 200. The interchangeable lens 300 includes a zoom ring 302 and a focus ring 303. Manual zooming is performed by the zoom ring 302 being rotationally operated. Manual focusing is performed by the focus ring 303 being rotationally operated.

The interchangeable lens 300 includes an outer casing 304 formed in an approximately cylindrical shape and a photographing lens 305 disposed on the foremost side. The zoom ring 302 and the focus ring 303 are rotatably supported on an outer surface side of the outer casing 304.

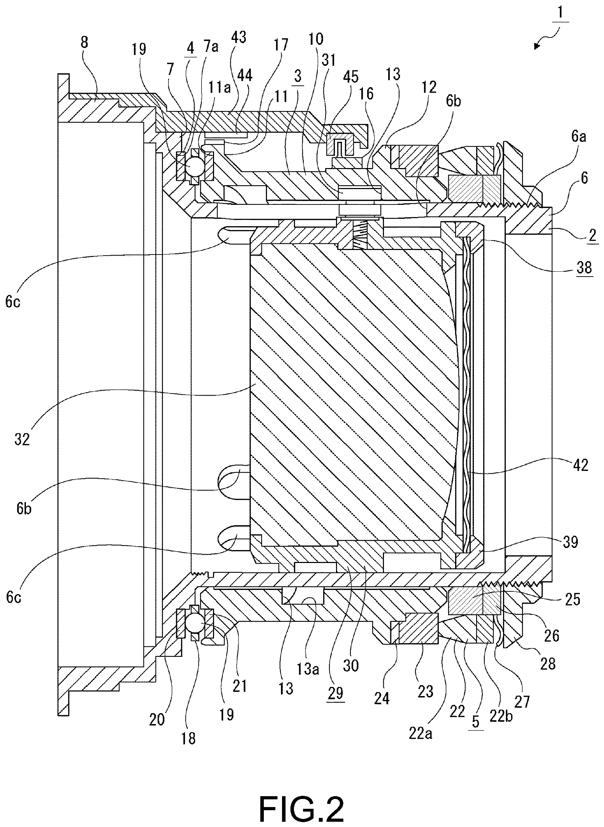

Inside the outer casing 304, an optical-device drive apparatus 1 is disposed (see Fig. 2). The optical-device drive apparatus 1 includes a securing ring for linear movement 2, a rotary drive body 3, a bearing 4, and an ultrasonic motor 5.

The securing ring for linear movement 2 has an axial direction defined in the front and back direction. The securing ring for linear movement 2 includes a supporting cylinder portion 6 formed in an approximately cylindrical shape, a receiver 7 having a flange shape extended outward from a front end portion of the supporting cylinder portion 6, and a cylindrical portion 8 extended forward from an outer peripheral portion of the receiver 7.

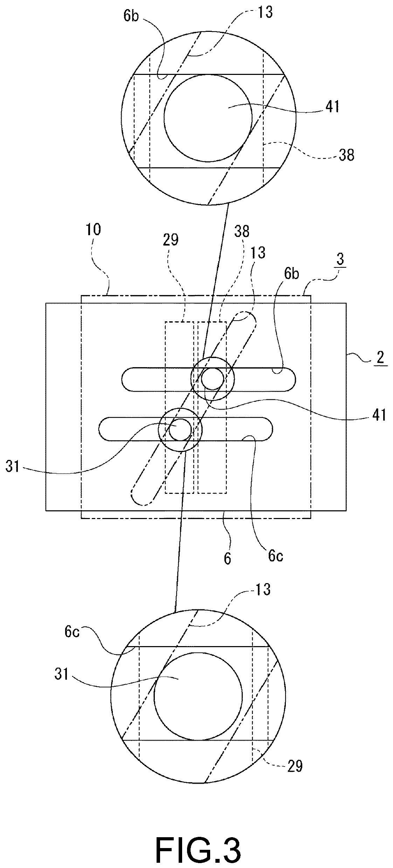

The length of the supporting cylinder portion 6 is set to be longer than that of the cylindrical portion 8 in the front and back direction. The supporting cylinder portion 6 includes a screwing portion 6a in an outer circumferential surface of the rear end portion. In the supporting cylinder portion 6, a guide hole 6b and a linear hole 6c each of which extends in the front and back direction are formed. The guide hole 6b and the linear hole 6c are positioned apart from each other in a circumferential direction (see Figs. 2 and 3). In the securing ring for linear movement 2, three pairs of guide holes 6b and linear holes 6c are, for example, formed apart from one another at equal intervals in the circumferential direction.

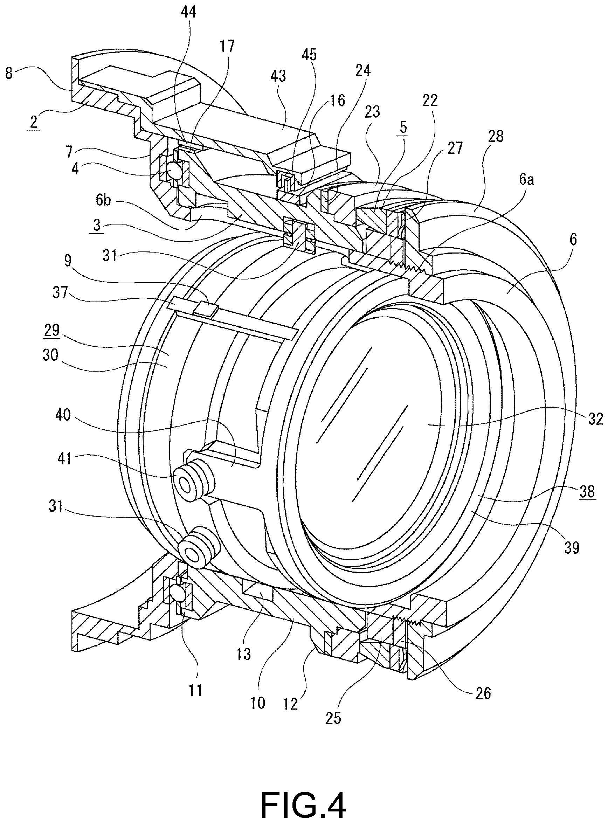

A movement position-detecting sensor 9 is attached to an inner surface of the supporting cylinder portion 6 (see Fig. 4).

An insertion recess portion 7a having a circular ring shape and opened backward is formed in the receiver 7 (see Fig. 2).

The rotary drive body 3 is, for example, a cam ring and is formed in an approximately cylindrical shape. Note that the rotary drive body 3 is not limited to the cam ring, and may be a helicoid or the like, for example.

The rotary drive body 3 is supported by the supporting cylinder portion 6 of the securing ring for linear movement 2 so as to be rotatable around an axis. The rotary drive body 3 is positioned on an outer peripheral side of the supporting cylinder portion 6. The rotary drive body 3 includes a cam drive unit 10 formed in a cylindrical shape, a pressing portion 11 having a flange shape extended outward from a front end portion of the cam drive unit 10, and a pressed protrusion 12 having a flange shape extended outward from a position of the cam drive unit 10, which is closer to the rear end.

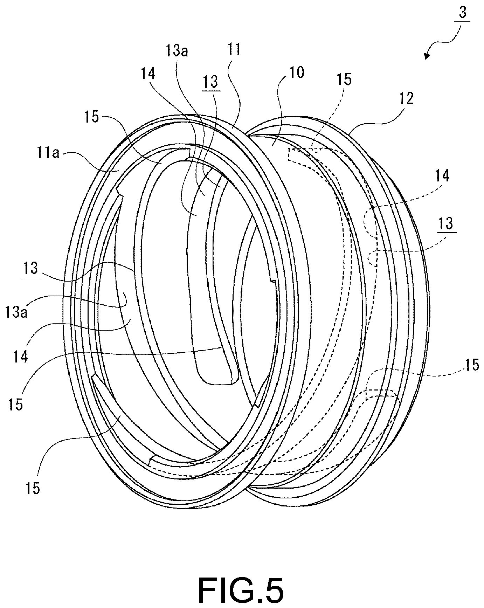

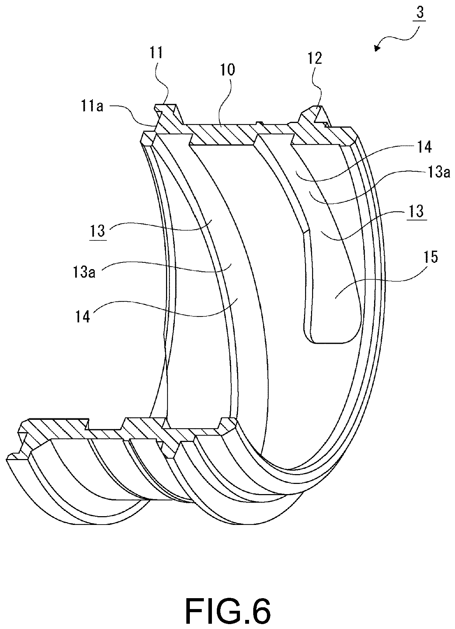

On an inner surface side of the cam drive unit 10, cam grooves 13, 13, 13 are formed apart from one another in the circumferential direction (see Figs. 2, 3, 5, and 6). The cam groove 13 is formed in a recess shape by a wall surface including a bottom surface 13a. A portion of the cam groove 13, which excludes both end portions in a longitudinal direction, is formed as a sliding portion 14 having a fixed groove width. The both end portions of the cam groove 13 are formed as retracting portions 15, 15 each having a groove width increasing in a direction away from the sliding portion 14 (see Fig. 6). Thus, the groove width of the retracting portion 15 is set to be larger than the groove width of the sliding portion 14. Note that the retracting portion 15 may be formed only at one end portion of the cam groove 13 in the longitudinal direction.

An insertion recess portion 11a having a circular ring shape and opened forward is formed in a front surface of the pressing portion 11 (see Figs. 2, 5, and 6).

In the rotary drive body 3, a detected body 16 is attached to an outer circumferential surface of the cam drive unit 10. A sensing sheet 17 is bonded to an outer circumferential surface of the pressing portion 11, having a longitudinal direction in the circumferential direction. Rotation position information of the rotary drive body 3 is written on the sensing sheet 17.

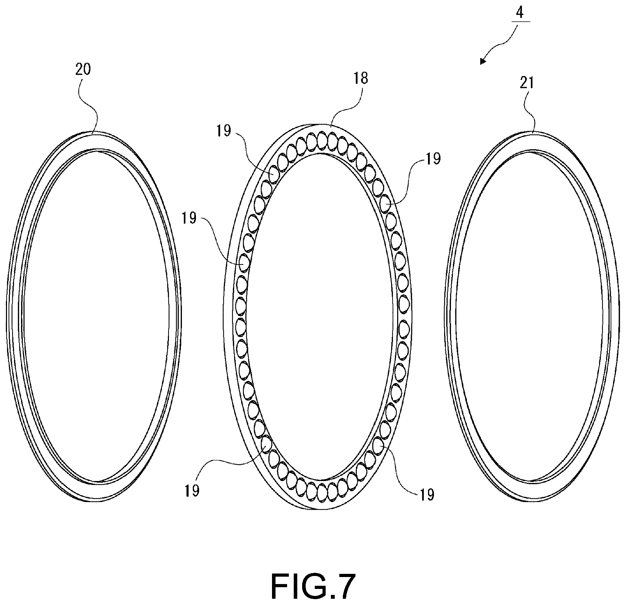

The bearing 4 includes a ball retainer 18, bearing balls 19, 19, ..., and track plates 20, 21 (see Figs. 2 and 7).

The ball retainer 18 is formed in a circular ring shape. The ball retainer 18 has a plurality of ball-retaining holes positioned apart from one another at equal intervals in the circumferential direction. The bearing balls 19, 19, ... are retained by being respectively inserted into the ball-retaining holes of the ball retainer 18. The track plates 20, 21 are formed in a circular ring shape having the same size as the ball retainer. The track plates 20, 21 are made rotatable with respect to the ball retainer 18 in a state in which the track plates 20, 21 are pressed against the bearing balls 19, 19, ... from opposite sides.

The bearing 4 is positioned between the receiver 7 and the pressing portion 11 in such a manner that the track plate 20 on the front side is inserted into the insertion recess portion 7a formed in the receiver 7 of the securing ring for linear movement 2 and the track plate 21 on the rear side is inserted into the insertion recess portion 11a formed in the pressing portion 11 of the rotary drive body 3.

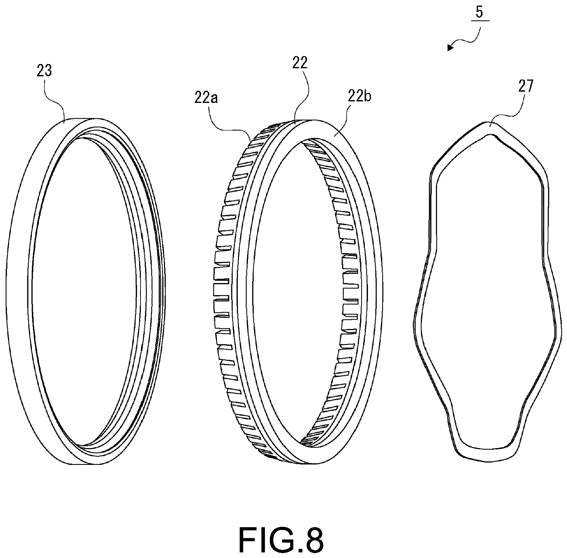

The ultrasonic motor 5 includes a stator 22 and a rotor 23 each of which is formed in a circular ring shape (see Figs. 2 and 8). The stator 22 is configured by a piezoelectric element 22a and a metal ring 22b being coupled. In the ultrasonic motor 5, flexural waves are generated at the metal ring 22b by voltage applied on the piezoelectric element 22a. Then, the rotor 23 is rotationally driven by a travelling wave thereof and driving force is generated.

The ultrasonic motor 5 is positioned on the outer peripheral side of the rear end portion of the supporting cylinder portion 6 in the securing ring for linear movement 2. The rotor 23 is positioned on the rear side of the pressed protrusion 12 in the rotary drive body 3.

In a state in which the ultrasonic motor 5 is positioned on the outer peripheral side of the supporting cylinder portion 6, a damper 24 having a circular ring shape and formed of rubber material or the like is disposed between the rotor 23 and the pressed protrusion 12. A rotation-restricting member 25 having an approximately circular ring shape is disposed between the stator 22 and the supporting cylinder portion 6. A ring screw 26 having a circular ring shape is disposed on the rear side of the rotation-restricting member 25. The ring screw 26 is screwed onto the screwing portion 6a of the supporting cylinder portion 6 and pressed against the rotation-restricting member 25 from the back, and the rotation-restricting member 25 is fixed to the supporting cylinder portion 6 with the ring screw 26. The rotation of the stator 22 is restricted with respect to the securing ring for linear movement 2 by the rotation-restricting member 25.

A compression spring 27 is disposed on the rear side the stator 22. The compression spring 27 is, for example, a flat spring formed in a circular ring shape. The compression spring 27 includes portions displaced forward and portions displaced backward in the circumferential direction, which are alternately arranged. As a whole, the compression spring 27 is formed in a wavy shape in the front and back direction. A presser ring 28 having a circular ring shape is disposed on the rear side of the compression spring 27. The presser ring 28 is screwed onto the screwing portion 6a of the supporting cylinder portion 6 and pressed against the compression spring 27 from the back, and the compression spring 27 is pressed against the stator 22 by the presser ring 28.

By the compression spring 27 being pressed against the stator 22, the stator 22 is biased toward the rotor 23 and the stator 22 is pressed against the rotor 23. Thus, the rotor 23 is pressed to the pressed protrusion 12 via the damper 24, and bias force of the compression spring 27 is applied to the rotary drive body 3 via the ultrasonic motor 5 and the damper 24.

The rotary drive body 3 is biased forward in the axial direction (front and back direction) by the compression spring 27, and the bias force of the compression spring 27 is applied to the bearing 4 via the rotary drive body 3. Thus, the bearing 4 is received by the receiver 7 in such a manner that the track plate 20 on the front side is inserted into the insertion recess portion 7a of the securing ring for linear movement 2, and hence the track plate 21 on the rear side is pressed against the bearing balls 19, 19, ... in the axial direction and the bearing balls 19, 19, ... are pressed against the track plate 20 by the bias force of the compression spring 27.

In this manner, in the optical-device drive apparatus 1, axial bias force is applied to the ultrasonic motor 5, the rotary drive body 3, and the bearing 4 by the compression spring 27, and the rotor 23 and the stator 22 are biased in a contact direction and the rotary drive body 3 and the bearing 4 are biased in a contact direction.

When voltage is applied on the piezoelectric element 22a of the stator 22 in the ultrasonic motor 5, the rotor 23 is rotated and driving force is applied to the rotary drive body 3 via the damper 24, and the rotor 23 and the rotary drive body 3 are integrally rotated. At this time, in the rotary drive body 3, the pressing portion 11 is pressed against the bearing 4, and hence the rotor 23 and the rotary drive body 3 are smoothly rotated by the action of the bearing 4.

As described above, the compression spring 27 is formed in an annular shape. Therefore, bias force is applied over the whole circumference of the bearing 4, the rotary drive body 3, and the ultrasonic motor 5 by the compression spring 27. Thus, a stable rotating state of the bearing 4 and the rotary drive body 3 can be ensured while preventing the bearing 4 and the rotary drive body 3 from tilting with respect to the axial direction.

A moving frame 29 is movably supported by the securing ring for linear movement 2 and the rotary drive body 3 (see Fig. 2). Due to rotation of the rotary drive body 3, the moving frame 29 is guided by the securing ring for linear movement 2 and moved in the optical axial direction (front and back direction).

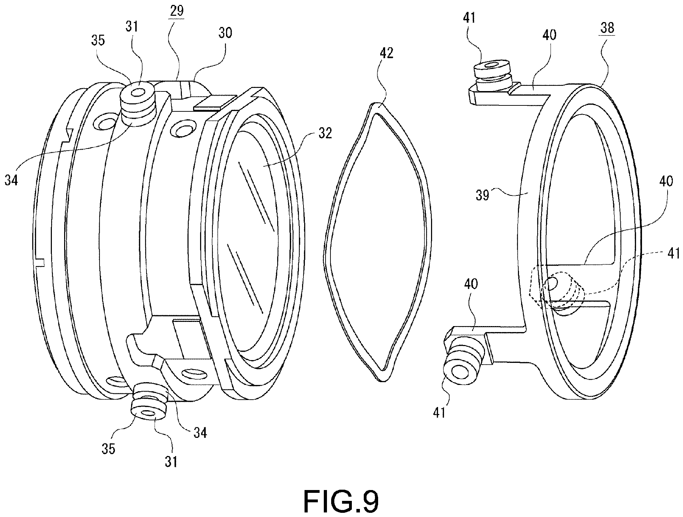

The moving frame 29 includes a retaining frame portion 30 formed in an approximately cylindrical shape and cam pins 31, 31, 31 attached to the retaining frame portion 30 (see Figs. 2 and 9).

A lens (or lens group) 32 that is an optical device is retained in the retaining frame portion 30.

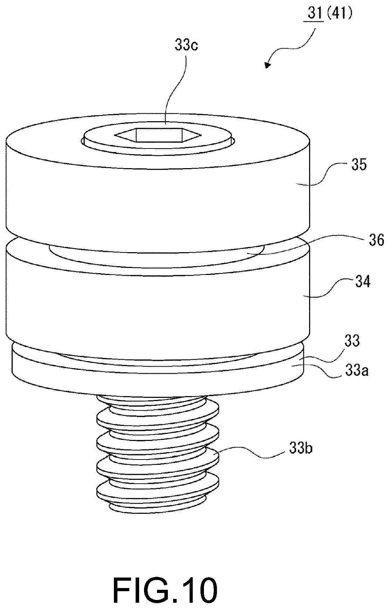

The cam pins 31, 31, 31 are attached at positions apart from one another at equal intervals in a circumferential direction of the retaining frame portion 30. The cam pin 31 includes a base 33 and bearing portions 34, 35 (see Fig. 10).

The base 33 includes a base portion 33a having a disk shape, a threaded portion 33b extended from the center portion of the base portion 33a, and a supporting shaft portion 33c extended from the center portion of the base portion 33a in a direction opposite to the threaded portion 33b. The bearing portions 34, 35 are supported on the supporting shaft portion 33c at a position on an opposite side sandwiching a spacer 36. The bearing portions 34, 35 are each made independently rotatable due to the spacer 36.

The cam pin 31 is attached by the threaded portion 33b being screwed into the retaining frame portion 30.

In the moving frame 29, a detection sheet 37 is bonded to the outer circumferential surface of the retaining frame portion 30, having a longitudinal direction in the front and back direction (see

Fig. 4). Movement position information of the moving frame 29 is written on the detection sheet 37.

The moving frame 29 retaining the lens 32 is movably supported by the securing ring for linear movement 2 and the rotary drive body 3 in such a manner that the cam pins 31, 31, 31 are respectively passed through the guide holes 6b, 6b, 6b of the securing ring for linear movement 2 and inserted into the cam grooves 13, 13, 13 of the rotary drive body 3. The bearing portion 34 of the cam pin 31 is slidably and rotatably supported in the guide hole 6b. The bearing portion 35 of the cam pin 31 is slidably and rotatably supported in the cam groove 13.

As described above, the two bearing portions 34, 35 of the cam pin 31 are made independently rotatable. Therefore, during movement of the moving frame 29, the bearing portion 34 and the bearing portion 35 are each rotatable at different speeds with respect to the guide hole 6b and the cam groove 13 and the moving frame 29 is smoothly moved in the optical axial direction.

The moving frame 29 and the lens 32 are guided by the guide holes 6b, 6b, 6b and moved in the optical axial direction while the positions of the cam pins 31, 31, 31 with respect to the cam grooves 13, 13, 13 are respectively changed by rotation of the rotary drive body 3 around the axis by driving force of the ultrasonic motor 5.

At this time, the information written on the detection sheet 37 is read by the movement position-detecting sensor 9 attached to the inner peripheral surface of the securing ring for linear movement 2, and the movement position of the moving frame 29 is detected.

The detection sheet 37 is a magnetic scale in which the N pole and the S pole are alternately arranged in the optical axial direction. The movement position-detecting sensor 9 is a sensor capable of detecting a magnetic pole change. For example, magneto resistive (MR) sensor is used as the movement position-detecting sensor 9. Due to movement of the moving frame 29, the relative positions of the movement position-detecting sensor 9 and the detection sheet 37 change, while the movement position-detecting sensor 9 is constantly positioned in a range in which the movement position-detecting sensor 9 can detect a magnetic pole change of the detection sheet 37. When the moving frame 29 moves in a range from one end to the other end in the optical axial direction, the movement position-detecting sensor 9 and the detection sheet 37 are relatively moved in a state in which the movement position-detecting sensor 9 and the detection sheet 37 overlap each other in a direction perpendicular to the optical axis at any positions. That is, the movement position-detecting sensor 9 and the detection sheet 37 are disposed in such a relationship that the detection sheet 37 is opposed to the movement position-detecting sensor 9 in the direction perpendicular to the optical axis when the moving frame 29 is positioned on the one end side in the optical axial direction and the detection sheet 37 is also opposed to the movement position-detecting sensor 9 in the direction perpendicular to the optical axis when the moving frame 29 is positioned on the other end side in the optical axial direction.

By the movement position-detecting sensor 9 and the detection sheet 37 being disposed in such a positional relationship, the information written on the detection sheet 37 is read by the movement position-detecting sensor 9 irrespective of the movement position of the moving frame 29 in the optical axial direction. Thus, the reliability of the detection operation regarding the movement position of the moving frame 29 in the optical axial direction can be improved.

During movement of the moving frame 29 and the lens 32 in the optical axial direction described above, the bearing portions 34 inserted into the guide holes 6b of the cam pins 31 are rotated with respect to the securing ring for linear movement 2 and the bearing portions 35 inserted into the cam grooves 13 are rotated with respect to the rotary drive body 3. Thus, the frictional force of the securing ring for linear movement 2, the rotary drive body 3, and the cam pins 31 is reduced, and the load on the securing ring for linear movement 2, the rotary drive body 3, and the ultrasonic motor 5 in the movement of the moving frame 29 can be reduced.

Further, in the rotary drive body 3, the cam groove 13 is formed in a recess shape by the wall surface including the bottom surface 13a, and hence no through-holes are formed in the rotary drive body 3. Therefore, the rigidity of the rotary drive body 3 increases, and the driving force transmitted from the ultrasonic motor 5 to the rotary drive body 3 is hardly attenuated. Thus, a stable operation state of the rotary drive body 3 can be ensured and the power consumption can be reduced.

A bias frame 38 is movably supported by the securing ring for linear movement 2 and the rotary drive body 3 (see Fig. 2). The bias frame 38 is guided by the securing ring for linear movement 2 and moved in the optical axial direction (front and back direction) by rotation of the rotary drive body 3.

The bias frame 38 includes an annular portion 39 formed in a circular ring shape, pin-mounting portions 40, 40, 40 extended forward from the annular portion 39, and engagement pins 41, 41, 41 respectively attached to the tops of the pin-mounting portions 40, 40, 40 (see Figs. 2 and 9). The pin-mounting portions 40, 40, 40 are extended from positions apart from one another at equal intervals in a circumferential direction of the annular portion 39.

The engagement pin 41 is, for example, set to have a structure similar to that of the cam pin 31. Although a detailed description is omitted, the engagement pin 41 includes a base and a pair of bearing portions.

A bias spring 42 is positioned between the retaining frame portion 30 of the moving frame 29 and the annular portion 39 of the bias frame 38. The bias spring 42 is, for example, a flat spring formed in a circular ring shape. The bias spring 42 includes portions displaced forward and portions displaced backward in the circumferential direction, which are alternately arranged. As a whole, the bias spring 42 is formed in a wavy shape in the front and back direction.

The moving frame 29 and the bias frame 38 are biased in opposite directions from each other by the bias spring 42. The moving frame 29 is biased forward and the bias frame 38 is biased backward.

The bias frame 38 is movably supported by the securing ring for linear movement 2 and the rotary drive body 3 in such a manner that the engagement pins 41, 41, 41 are respectively passed through the guide holes 6b, 6b, 6b of the securing ring for linear movement 2 and inserted into the cam grooves 13, 13, 13 of the rotary drive body 3. One bearing portion of the engagement pin 41 is slidably and rotatably supported in the guide hole 6b. The other bearing portion of the engagement pin 41 is slidably and rotatably supported in the cam groove 13.

The bias frame 38 is guided by the guide holes 6b, 6b, 6b and moved in the optical axial direction while the positions of the engagement pins 41, 41, 41 with respect to the cam grooves 13, 13, 13 are respectively changed by rotation of the rotary drive body 3 around the axis by driving force of the ultrasonic motor 5. Thus, the bias frame 38 is moved in the optical axial direction integrally with the moving frame 29.

At this time, the moving frame 29 and the bias frame 38 are biased in the opposite directions from each other by the bias spring 42. Thus, the cam pins 31, 31, 31 of the moving frame 29 are pressed against the wall surfaces forming the cam grooves 13, 13, 13 and the wall surfaces forming the guide holes 6b, 6b, 6b, and the engagement pins 41, 41, 41 of the bias frame 38 are also pressed against the wall surfaces forming the cam grooves 13, 13, 13 and the wall surfaces forming the guide holes 6b, 6b, 6b (see enlarged views of Fig. 3).

As described above, the optical-device drive apparatus 1 includes the bias frame 38 positioned apart from the moving frame 29 in the axial direction and supported by the rotary drive body 3 and the bias spring 42 that biases the moving frame 29 with respect to the bias frame 38 in the axial direction.

Thus, the cam pin 31 of the moving frame 29 is pressed against the wall surface forming the cam groove 13, and hence the accuracy of the position of the lens 32 with respect to the rotary drive body 3 increases, and the optical performance of the image pickup apparatus 100 can be improved.

Further, the bias frame 38 includes the engagement pins 41 that are slidably engaged with the cam grooves 13, and hence the cam pins 31 and the engagement pins 41 are slidably engaged with the cam groove 13 together. Thus, the shape of the rotary drive body 3 can be simplified and a reduction in rigidity of the rotary drive body 3 can be suppressed.

In addition, the engagement pin 41 is set to have a structure similar to that of the cam pin 31 and includes the pair of bearing portions. Thus, during movement of the moving frame 29 and the lens 32 in the optical axial direction, the frictional force of the securing ring for linear movement 2, and the rotary drive body 3, and the engagement pins 41 is reduced, and the load on the securing ring for linear movement 2, the rotary drive body 3, and the ultrasonic motor 5 can be reduced.

Note that, although the example in which the moving frame 29 and the bias frame 38 are biased in the opposite directions from each other by the bias spring 42 has been shown above, the moving frame 29 and the bias frame 38 may be biased in a direction to approach each other conversely by the bias spring.

A sensor-retaining plate 43 is attached to the securing ring for linear movement 2 (see Figs. 2 and 4). The sensor-retaining plate 43 is formed in a shape extending in the front and back direction. A front end portion of the sensor-retaining plate 43 is attached at a position from the cylindrical portion 8 to the receiver 7 in the securing ring for linear movement 2. The sensor-retaining plate 43 is positioned along the outer circumferential surface of the supporting cylinder portion 6 in the securing ring for linear movement 2. The sensor-retaining plate 43 retains a rotation position-detecting sensor 44 and a reset position-detecting sensor 45 on a surface opposed to the supporting cylinder portion 6. The rotation position-detecting sensor 44 and the reset position-detecting sensor 45 are positioned apart from each other in the front and back direction.

During rotation of the rotary drive body 3, the information written on the sensing sheet 17 attached to the outer circumferential surface of the rotary drive body 3 is read by the rotation position-detecting sensor 44, and the rotation position of the rotary drive body 3 is detected. Further, by the reset position-detecting sensor 45 detecting the detected body 16 attached to the outer circumferential surface of the rotary drive body 3, a reference position of the rotary drive body 3 in a direction of rotation is detected. By the reference position of the rotary drive body 3 in the direction of rotation being detected, it becomes possible to detect an absolute position of the rotary drive body 3 in the direction of rotation by the rotation position-detecting sensor 44 reading the information of the sensing sheet 17.

During rotation of the rotary drive body 3, the moving frame 29 is moved in the optical axial direction, and hence the movement position of the moving frame 29 is detected by the movement position-detecting sensor 9 as described above. Thus, during rotation of the rotary drive body 3, the detection of the movement position of the moving frame 29 by the movement position-detecting sensor 9 and the detection of the rotation position of the rotary drive body 3 by the rotation position-detecting sensor 44 are performed.

The level of the detected value regarding the movement position of the moving frame 29, which is obtained by the movement position-detecting sensor 9, and the level of the detected value regarding the rotation position of the rotary drive body 3, which is obtained by the rotation position-detecting sensor 44, are the same level (equivalent) in a state in which smooth movement of the moving frame 29 and smooth rotation of the rotary drive body 3 are achieved.

On the other hand, when backlash or the like occurs due to vibration or the like and the smooth movement of the moving frame 29 or the smooth rotation of the rotary drive body 3 is not achieved, the level of the detected value regarding the movement position of the moving frame 29, which is obtained by the movement position-detecting sensor 9, and the level of the detected value regarding the rotation position of the rotary drive body 3, which is obtained by the rotation position-detecting sensor 44, have a difference. In the image pickup apparatus 100, it is possible to calculate a displacement of the center position of the lens 32 and a tilt of the lens 32 on the basis of this difference between the levels of the detected values.

As described above, in the optical-device drive apparatus 1, the positional information of the lens 32 is calculated on the basis of the detection results of the movement position-detecting sensor 9 and the rotation position-detecting sensor 44. Thus, the positional information of the lens 32 is calculated on the basis of the rotation position of the rotary drive body 3 and the movement position of the moving frame 29, and hence a dedicated sensor that detects the position of the lens 32 is not needed. Thus, the structure in the optical-device drive apparatus 1 can be simplified.

### <Operation of Interchangeable Lens>

Hereinafter, a schematic operation in the interchangeable lens 300 will be described.

In the interchangeable lens 300, when the rotary drive body 3 is rotated around the axis by driving force of the ultrasonic motor 5 as described above, the moving frame 29 and the lens 32 are guided by the guide holes 6b, 6b, 6b and moved in the optical axial direction while the positions of the cam pins 31, 31, 31 with respect to the cam grooves 13, 13, 13 are changed. By the lens 32 being moved in the optical axial direction, focusing or zooming is performed.

At this time, focusing or zooming is performed while the relative positions of the cam pins 31 with respect to the sliding portions 14 of the cam grooves 13 are changed. Thus, the sliding portions 14 are portions used when focusing or zooming is performed. The retracting portion 15 is not used when focusing or zooming is performed.

When photographing or the like by the image pickup apparatus 100 ends and the power supply is cut and the energization of the interchangeable lens 300 is stopped by operating a power supply button, the interchangeable lens 300 and the lens 32 thereof are put in a non-use state. When the energization of the interchangeable lens 300 is stopped, the moving frame 29 is moved to the end of movement in the optical axial direction and the cam pins 31, 31, 31 are moved to the retracting portions 15, 15, 15 of the cam grooves 13, 13, 13, respectively. Thus, the engagement of the cam pins 31 with the sliding portions 14 is cancelled.

In this manner, when the lens 32 is in the non-use state, the cam pins 31 are positioned at the retracting portions 15 of the cam grooves 13. Therefore, when impact or the like occurs under the non-use state, the cam pins 31 are displaced at the retracting portions 15. Thus, even if the cam pins 31 are displaced in the cam grooves 13 and come into contact with the wall surfaces forming the cam grooves 13,
the cam pins 31 come into contact with the wall surfaces forming the retracting portions 15, and hence the sliding portions 14 are not damaged by the cam pins 31. Thus, favorable optical performance in focusing or zooming can be ensured also if impact or the like occurs.

Note that the cam pins 31 include the bearing portions 34, 35 made of metal and the cam grooves 13 are easily damaged when the cam pins 31 are displaced in the cam grooves 13, and hence forming the retracting portions 15 in the cam grooves 13 is very effective for ensuring the favorable optical performance in focusing or zooming.

Further, when the energization of the interchangeable lens 300 is stopped, it is desirable that the engagement pins 41, 41, 41 of the bias frame 38 be moved to the retracting portions 15, 15, 15 together with the cam pins 31, 31, 31.

In the optical-device drive apparatus 1, it is possible to perform manual zooming or manual focusing by manually rotating the zoom ring 302 or the focus ring 303.

For example, when the focus ring 303 is manually rotated, a rotation amount of the focus ring 303 is detected, driving force according to the detection result is generated in the ultrasonic motor 5, and focusing is performed by the moving frame 29 being moved by a distance corresponding to the rotation amount of the focus ring 303.

In this manner, in the optical-device drive apparatus 1, the moving frame 29 is moved on the basis of the detection result of the rotation amount of the focus ring 303, and hence it is unnecessary to provide a transmission mechanism (speed reduction mechanism) that transmits rotational force of the focus ring 303 to the moving frame 29. Thus, the size and weight can be accordingly reduced.

Note that the interchangeable lens 300 may include an optical-device drive apparatus for zooming having a structure similar to that of the optical-device drive apparatus 1, which is operated when the zoom ring 302 is rotated. In this case, zooming is performed by a moving frame in the optical-device drive apparatus for zooming being moved in accordance with a detection result of a rotation amount of the zoom ring 302. Alternatively, the optical-device drive apparatus 1 may be an apparatus used for both focusing and zooming.

### <One Embodiment of Image Pickup Apparatus>

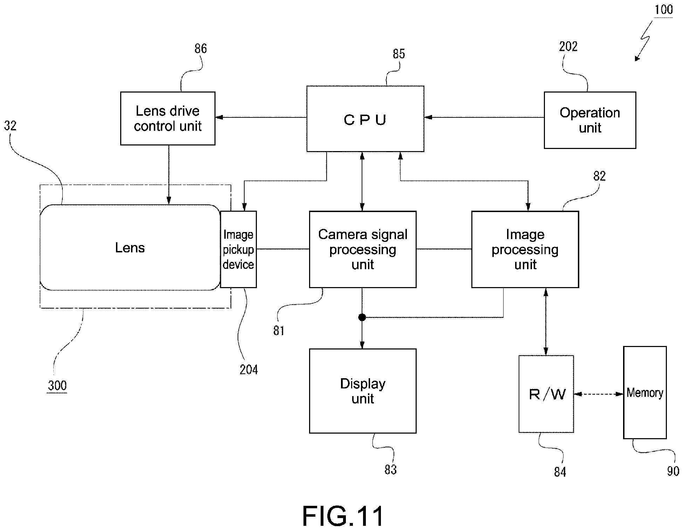

Fig. 11 is a block diagram showing an embodiment of the image pickup apparatus of the present technology.

An image pickup apparatus 100 includes an interchangeable lens 300 having an image pickup function, a camera signal processing unit 81 that performs signal processing such as analog-to-digital conversion on captured image signals, and an image processing unit 82 that performs recording/reproducing processing of the image signals. Further, the image pickup apparatus 100 includes a display unit (display) 83 that displays a captured image and the like, a reader/writer (R/W) 84 that writes and reads out image signals to/from a memory 90, a central processing unit (CPU) 85 that performs overall control of the image pickup apparatus 100, an operation unit 202 including various switches and the like, to which necessary operations are performed by a user, and a lens drive control unit 86 that controls driving of the lens 32 disposed in the interchangeable lens 300.

The interchangeable lens 300 includes an optical system including the lens 32, an image pickup device 204 such as a charge coupled device (CCD) and a complementary metal-oxide semiconductor (CMOS), and the like.

The camera signal processing unit 81 performs various types of signal processing such as conversion into digital signals, noise removal, image quality correction, and conversion into luminance/color difference signals, on output signals from the image pickup device 204.

The image processing unit 82 performs compression coding/decompression decoding processing on image signals which is based on a predetermined image data format, processing of converting data specifications such as resolution, and the like.

The display unit 83 has a function of displaying various types of data such as data of an operation state of the user with respect to the operation unit 202 and data of a captured image. Note that the display unit 83 does not need to be provided in the image pickup apparatus 100, and an image may be displayed by sending captured image data to another display apparatus.

The R/W 84 writes image data encoded by the image processing unit 82 in the memory 90 and reads out image data recorded in the memory 90.

The CPU 85 functions as a control processing unit that controls respective circuit blocks provided in the image pickup apparatus 100, and controls the respective circuit blocks on the basis of an instruction input signal or the like from the operation unit 202.

The operation unit 202 outputs an instruction input signal corresponding to the user operation to the CPU 85.

The lens drive control unit 86 controls a driving source (ultrasonic motor 5) that moves the lens 32 on the basis of a control signal from the CPU 85.

The memory 90 is, for example, a semiconductor memory detachable from a slot connected to the R/W 84.

Hereinafter, an operation in the image pickup apparatus 100 will be described.

In a photographing standby state, captured image signals are output to the display unit 83 via the camera signal processing unit 81 and displayed as a camera-through image under the control of the CPU 85. Further, when an instruction input signal is input from the operation unit 202, the CPU 85 outputs a control signal to the lens drive control unit 86, and the lens 32 is moved under the control of the lens drive control unit 86.

When a photographing operation is performed in accordance with the instruction input signal from the operation unit 202, captured image signals are output from the camera signal processing unit 81 to the image processing unit 82 to be subjected to compression coding processing, and the signals are converted into digital data having a predetermined data format. The converted data is output to the R/W 84 and written on the memory 90.

For reproducing image data recorded in the memory 90, predetermined image data is read out from the memory 90 by the R/W 84 in accordance with an operation performed on the operation unit 202, and after the image processing unit 82 performs decompression decoding processing, reproduction image signals are output to the display unit 83, such that a reproduction image is displayed.

### <Conclusion>

As described above, in the optical-device drive apparatus 1, the interchangeable lens 300, and the image pickup apparatus 100, the optical-device drive apparatus 1 includes the compression spring 27 that applies axial bias force to the ultrasonic motor 5, the rotary drive body 3, and the bearing 4. The rotor 23 and the stator 22 are biased in the contact direction and the rotary drive body 3 and the bearing 4 are biased in the contact direction by the compression spring 27.

Thus, bias force is applied from the compression spring 27 to the ultrasonic motor 5 in such a direction that the rotor 23 and the stator 22 come into contact with each other and bias force is applied from the compression spring 27 to the rotary drive body 3 or the bearing 4 in such a direction that both come into contact with each other. Thus, a smooth rotating state of the rotary drive body 3 including the cam ring and the like can be ensured with a simple structure without deteriorating the characteristics of the ultrasonic motor 5.

Further, the securing ring for linear movement 2 that guides the lens 32 that is the optical device in the axial direction (optical axial direction) is provided, and the securing ring for linear movement 2 is provided with the receiver 7 that receives the bearing 4 or the rotary drive body 3 biased by the compression spring 27 in the axial direction.

Thus, the securing ring for linear movement 2 functions as a guide member that guides the lens 32 and functions as a receiver member that receives the bearing 4 or the rotary drive body 3. Therefore, it is unnecessary to additionally provide a guide member and a receiver member. Thus, the production cost can be reduced due to the reduced number of components.

Note that the configuration in which the rotor 23 and the stator 22 are biased in the contact direction by the compression spring 27 and the rotary drive body 3 and the bearing 4 are biased in the contact direction as in the above-mentioned optical-device drive apparatus 1 is particularly suitable in a case where the driven body has a weight of 50 g to 500 g. Specifically, the driven body in the optical-device drive apparatus 1 includes the moving frame 29, the lens 32, the bias frame 38, and the bias spring 42, and hence, in the case where their total weight is 50 g to 500 g, a smooth rotating state of the rotary drive body 3 can be ensured with a simple structure without deteriorating the characteristics of the ultrasonic motor 5 by employing the configuration in which the compression spring 27 performs biasing in the above-mentioned manner.

### <Others>

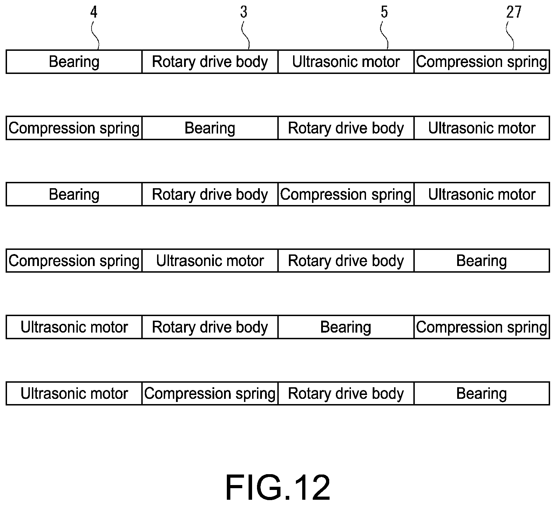

The example in which the order of the bearing 4, the rotary drive body 3, the ultrasonic motor 5, and the compression spring 27 from on the front side is employed as an arrangement order of the rotary drive body 3, the bearing 4, the ultrasonic motor 5, and the compression spring 27 has been shown above (see uppermost part of Fig. 12).

It should be noted that, in the present technology, it is only necessary to provide the configuration in which the rotor 23 and the stator 22 are biased in the contact direction and the rotary drive body 3 and the bearing 4 are biased in the contact direction by the compression spring 27. Thus, as shown in the examples below the upper most part of Fig. 12 in order from above, the arrangement order may be the order of the compression spring 27, the bearing 4, the rotary drive body 3, and the ultrasonic motor 5 from the front side, the arrangement order may be the order of the bearing 4, the rotary drive body 3, the compression spring 27, and the ultrasonic motor 5 from the front side, the arrangement order may be the order of the compression spring 27, the ultrasonic motor 5, the rotary drive body 3, and the bearing 4 from the front side, and the arrangement order may be the order of the ultrasonic motor 5, the rotary drive body 3, the bearing 4, and the compression spring 27 from the front side, or the arrangement order may be the order of the ultrasonic motor 5, the compression spring 27, the rotary drive body 3, and the bearing 4 from the front side.

Further, although the example in which the lens (lens group) 32 is used as the optical device has been shown above, the optical device is not limited to the lens 32, and, for example, a diaphragm, an iris, an image pickup device, and the like may be used as the optical device.

### <Present Technology>

The present technology can also take the following configurations.
(1) An optical-device drive apparatus, including:
   an ultrasonic motor including a rotor and a stator;
   a rotary drive body that moves an optical device in an axial direction by being rotated around an axis by driving force of the ultrasonic motor;
   a bearing rotatable around the axis; and
   a compression spring that applies axial bias force to the ultrasonic motor, the rotary drive body, and the bearing, in which
   the rotor and the stator are biased in a contact direction and the rotary drive body and the bearing are biased in a contact direction by the compression spring.
(2) The optical-device drive apparatus according to (1), further including
   a securing ring for linear movement that guides the optical device in the axial direction, in which
   the securing ring for linear movement includes a receiver that receives the bearing or the rotary drive body biased by the compression spring in the axial direction.
(3) The optical-device drive apparatus according to (1) or (2), in which
   the compression spring is formed in an annular shape.
(4) The optical-device drive apparatus according to any of (1) to (3), in which
   the rotary drive body includes a cam ring having a cam groove,
   further including a moving frame that retains the optical device, the moving frame including a cam pin that is slidably engaged with the cam groove, in which
   the cam groove is formed in a recess shape by a wall surface including a bottom surface.
(5) The optical-device drive apparatus according to (4), in which
   the cam pin includes a bearing portion rotatable with respect to the cam groove.
(6) The optical-device drive apparatus according to (4) or (5), further including:
   a bias frame that is positioned apart from the moving frame in the axial direction and supported by the cam ring; and
   a bias spring that biases the moving frame and the bias frame in a direction to be spaced away from each other or a direction to approach each other in the axial direction.
(7) The optical-device drive apparatus according to (6), in which
   the bias frame includes an engagement pin that is slidably engaged with the cam groove.
(8) The optical-device drive apparatus according to any of (4) to (7), in which
   the cam groove includes a retracting portion at at least one end portion, the retracting portion having a larger groove width than a groove width of other part, and
   the cam pin is positioned at the retracting portion when the optical device is in a non-use state.
(9) The optical-device drive apparatus according to any of (4) to (8), further including:
   a rotation position-detecting sensor that detects a rotation position of the cam ring; and
   a movement position-detecting sensor that detects a movement position of the moving frame, in which
   the rotation position-detecting sensor and the movement position-detecting sensor provide detection results based on which positional information of the optical device is calculated.
(10) An interchangeable lens, including:
   an outer casing having a cylindrical shape; and
   an optical-device drive apparatus that performs driving of an optical device, the optical-device drive apparatus being disposed inside the outer casing and including
      an ultrasonic motor including a rotor and a stator,
      a rotary drive body that moves the optical device in an axial direction by being rotated around an axis by driving force of the ultrasonic motor,
      a bearing rotatable around the axis, and
      a compression spring that applies axial bias force to the ultrasonic motor, the rotary drive body, and the bearing, in which
   the rotor and the stator are biased in a contact direction and the rotary drive body and the bearing are biased in a contact direction by the compression spring.
(11) The interchangeable lens according to (10), in which
   the optical-device drive apparatus further includes a securing ring for linear movement that guides the optical device in the axial direction, in which
   the securing ring for linear movement includes a receiver that receives the bearing or the rotary drive body biased by the compression spring in the axial direction.
(12) The interchangeable lens according to (10) or (11), in which the compression spring is formed in an annular shape.
(13) The interchangeable lens according to any of (10) to (12), in which
   the rotary drive body includes a cam ring having a cam groove,
   the optical-device drive apparatus further includes a moving frame that retains the optical device, the moving frame including a cam pin that is slidably engaged with the cam groove, and
   the cam groove is formed in a recess shape by a wall surface including a bottom surface.
(14) The interchangeable lens according to (13), in which
   the cam pin includes a bearing portion rotatable with respect to the cam groove.
(15) The interchangeable lens according to (13) or (14), in which
   the optical-device drive apparatus further includes
   a bias frame that is positioned apart from the moving frame in the axial direction and supported by the cam ring, and
   a bias spring that biases the moving frame and the bias frame in a direction to be spaced away from each other or a direction to approach each other in the axial direction.
(16) The interchangeable lens according to (15), in which
   the bias frame includes an engagement pin that is slidably engaged with the cam groove.
(17) The interchangeable lens according to any of (13) to (16), in which
   the cam groove includes a retracting portion at at least one end portion, the retracting portion having a larger groove width than a groove width of other part, and
   the cam pin is positioned at the retracting portion when the optical device is in a non-use state.
(18) The interchangeable lens according to any of (13) to (17), in which
   the optical-device drive apparatus further includes
   a rotation position-detecting sensor that detects a rotation position of the cam ring, and
   a movement position-detecting sensor that detects a movement position of the moving frame, and the rotation position-detecting sensor and the movement position-detecting sensor provide detection results based on which positional information of the optical device is calculated.
(19) The interchangeable lens according to any of (10) to (18), in which
   the optical-device drive apparatus further includes a movement position-detecting sensor and a detection sheet that detect a movement position of the moving frame, and
   the movement position-detecting sensor and the detection sheet are disposed in such a positional relationship that the movement position-detecting sensor and the detection sheet overlap each other in a direction perpendicular to an optical axis in an entire movement region in which the moving frame moves in an optical axial direction.
(20) An image pickup apparatus, including:
   an optical-device drive apparatus that drives an optical device; and
   an image pickup device that converts an optical image captured via a photographing optical system into an electrical signal, the optical-device drive apparatus including
      an ultrasonic motor including a rotor and a stator,
      a rotary drive body that moves the optical device in an axial direction by being rotated around an axis by driving force of the ultrasonic motor,
      a bearing rotatable around the axis, and
      a compression spring that applies axial bias force to the ultrasonic motor, the rotary drive body, and the bearing, in which
   the rotor and the stator are biased in a contact direction and the rotary drive body and the bearing are biased in a contact direction by the compression spring.

### Reference Signs List

- 100: image pickup apparatus
- 204: image pickup device
- 300: interchangeable lens
- 1: optical-device drive apparatus
- 2: securing ring for linear movement
- 3: rotary drive body
- 4: bearing
- 5: ultrasonic motor
- 7: receiver
- 9: movement position-detecting sensor
- 13: cam groove
- 13a: bottom surface
- 15: retracting portion
- 22: stator
- 23: rotor
- 27: compression spring
- 29: moving frame
- 31: cam pin
- 32: lens (optical device)
- 34: bearing portion
- 35: bearing portion
- 38: bias frame
- 41: engagement pin
- 42: bias spring
- 44: rotation position-detecting sensor

## Claims

1. An optical-device drive apparatus, comprising:
an ultrasonic motor including a rotor and a stator;
a rotary drive body that moves an optical device in an axial direction by being rotated around an axis by driving force of the ultrasonic motor;
a bearing rotatable around the axis; and
a compression spring that applies axial bias force to the ultrasonic motor, the rotary drive body, and the bearing, wherein
the rotor and the stator are biased in a contact direction and the rotary drive body and the bearing are biased in a contact direction by the compression spring.

2. The optical-device drive apparatus according to claim 1, further comprising
a securing ring for linear movement that guides the optical device in the axial direction, wherein
the securing ring for linear movement includes a receiver that receives the bearing or the rotary drive body biased by the compression spring in the axial direction.

3. The optical-device drive apparatus according to claim 1, wherein
the compression spring is formed in an annular shape.

4. The optical-device drive apparatus according to claim 1, wherein
the rotary drive body comprises a cam ring having a cam groove,
further comprising a moving frame that retains the optical device, the moving frame including a cam pin that is slidably engaged with the cam groove, wherein
the cam groove is formed in a recess shape by a wall surface including a bottom surface.

5. The optical-device drive apparatus according to claim 4, wherein
the cam pin includes a bearing portion rotatable with respect to the cam groove.

6. The optical-device drive apparatus according to claim 4, further comprising:
a bias frame that is positioned apart from the moving frame in the axial direction and supported by the cam ring; and
a bias spring that biases the moving frame and the bias frame in a direction to be spaced away from each other or a direction to approach each other in the axial direction.

7. The optical-device drive apparatus according to claim 6, wherein
the bias frame includes an engagement pin that is slidably engaged with the cam groove.

8. The optical-device drive apparatus according to claim 4, wherein
the cam groove includes a retracting portion at at least one end portion, the retracting portion having a larger groove width than a groove width of other part, and
the cam pin is positioned at the retracting portion when the optical device is in a non-use state.

9. The optical-device drive apparatus according to claim 4, further comprising:
a rotation position-detecting sensor that detects a rotation position of the cam ring; and
a movement position-detecting sensor that detects a movement position of the moving frame, wherein
the rotation position-detecting sensor and the movement position-detecting sensor provide detection results based on which positional information of the optical device is calculated.

10. An interchangeable lens, comprising:
an outer casing having a cylindrical shape; and
an optical-device drive apparatus that performs driving of an optical device, the optical-device drive apparatus being disposed inside the outer casing and including
an ultrasonic motor including a rotor and a stator,
a rotary drive body that moves the optical device in an axial direction by being rotated around an axis by driving force of the ultrasonic motor,
a bearing rotatable around the axis, and
a compression spring that applies axial bias force to the ultrasonic motor, the rotary drive body, and the bearing, wherein
the rotor and the stator are biased in a contact direction and the rotary drive body and the bearing are biased in a contact direction by the compression spring.

11. The interchangeable lens according to claim 10, wherein
the optical-device drive apparatus further includes a securing ring for linear movement that guides the optical device in the axial direction, wherein
the securing ring for linear movement includes a receiver that receives the bearing or the rotary drive body biased by the compression spring in the axial direction.

12. The interchangeable lens according to claim 10, wherein
the compression spring is formed in an annular shape.

13. The interchangeable lens according to claim 10, wherein
the rotary drive body comprises a cam ring having a cam groove,
the optical-device drive apparatus further includes a moving frame that retains the optical device, the moving frame including a cam pin that is slidably engaged with the cam groove, and
the cam groove is formed in a recess shape by a wall surface including a bottom surface.

14. The interchangeable lens according to claim 13, wherein
the cam pin includes a bearing portion rotatable with respect to the cam groove.

15. The interchangeable lens according to claim 13, wherein
the optical-device drive apparatus further includes
a bias frame that is positioned apart from the moving frame in the axial direction and supported by the cam ring, and
a bias spring that biases the moving frame and the bias frame in a direction to be spaced away from each other or a direction to approach each other in the axial direction.

16. The interchangeable lens according to claim 15, wherein the bias frame includes an engagement pin that is slidably engaged with the cam groove.

17. The interchangeable lens according to claim 13, wherein
the cam groove includes a retracting portion at at least one end portion, the retracting portion having a larger groove width than a groove width of other part, and
the cam pin is positioned at the retracting portion when the optical device is in a non-use state.

18. The interchangeable lens according to claim 13, wherein
the optical-device drive apparatus further includes
a rotation position-detecting sensor that detects a rotation position of the cam ring, and
a movement position-detecting sensor that detects a movement position of the moving frame, and the rotation position-detecting sensor and the movement position-detecting sensor provide detection results based on which positional information of the optical device is calculated.

19. The interchangeable lens according to claim 10, wherein
the optical-device drive apparatus further includes a movement position-detecting sensor and a detection sheet that detect a movement position of the moving frame, and
the movement position-detecting sensor and the detection sheet are disposed in such a positional relationship that the movement position-detecting sensor and the detection sheet overlap each other in a direction perpendicular to an optical axis in an entire movement region in which the moving frame moves in an optical axial direction.

20. An image pickup apparatus, comprising:
an optical-device drive apparatus that drives an optical device; and
an image pickup device that converts an optical image captured via a photographing optical system into an electrical signal, the optical-device drive apparatus including
an ultrasonic motor including a rotor and a stator,
a rotary drive body that moves the optical device in an axial direction by being rotated around an axis by driving force of the ultrasonic motor,
a bearing rotatable around the axis, and
a compression spring that applies axial bias force to the ultrasonic motor, the rotary drive body, and the bearing, wherein
the rotor and the stator are biased in a contact direction and the rotary drive body and the bearing are biased in a contact direction by the compression spring.
